# EUROPEAN PATENT APPLICATION

(11) **EP 4 765 847 A1**
(43) Date of publication of application: **24.06.2026**
(21) Application number: 25225260.6
(22) Date of filing: 18.12.2025
(51) Int. Cl.: H04N 23/90, H04N 23/20, H04N 23/11, H04N 23/56, H04N 23/60, B60R 1/04, B60R 1/29, B60R 1/30, G06V 10/141, G06V 10/143

(54) **INFRARED (IR) CAMERAS CONTROLLED WITHOUT MESSAGING THEREBETWEEN TO HAVE NON-OVERLAPPING ILLUMINATION**

(30) Priority: 20.12.2024 US 202418989940
(71) Applicant: Harman Becker Automotive Systems, Inc., Novi, MI 48377 (US)
(72) Inventor: MATTERN, Heinz, Milford, MI, 48380 (US)
(74) Representative: Rummler, Felix

(57) **Abstract**

A system, such as a driver monitoring system (DMS) for a vehicle, includes a first infrared (IR) camera, a second IR camera, a sensor, and a controller. The first camera is configured to output a first IR light, such as to illuminate a driver of the vehicle with the first IR light for use of the first camera in monitoring the driver. The second camera is configured to output a second IR light, such as to illuminate the driver with a second IR light for use of the second camera in monitoring the driver. The sensor is configured to detect the first IR light being outputted by the first camera. The controller is configured to control the second camera to not output the second IR light while the sensor detects the first IR light being outputted by the first camera.

## Description

### TECHNICAL FIELD

The present disclosure relates to multiple infrared (IR) cameras that are controlled to have non-overlapping IR illumination.

### BACKGROUND

An infrared (IR) camera uses infrared light to monitor a target. In use, an IR emitter of the IR camera outputs infrared light to illuminate a target, and the IR camera detects the infrared light reflected from the target to thereby monitor the target. Infrared light enhances visibility in low-light or nighttime conditions making the IR camera ideal for continuous monitoring.

A driver monitoring system (DMS) of a vehicle includes an IR camera. The IR camera is oriented towards a driver of the vehicle who is seated in a cabin of the vehicle. The IR camera uses infrared light to track and monitor physical and behavior cues of the driver. For instance, the IR camera tracks and monitors eye movements, head position, and facial expressions of the driver.

A vehicle may have one or more other IR cameras, other than the IR camera of a DMS, to monitor other occupants and/or areas of the vehicle cabin.

A requirement of using multiple IR cameras in an environment, such as a vehicle cabin, may be that the IR cameras are not to use infrared light concurrently. That is, the IR cameras are not to have overlapping or concurrent IR illumination and are not to output IR light at the same time. This requirement may be stricter when multiple IR cameras are monitoring the same target.

One option for complying with the requirement is to have the IR cameras be controllable by a common controller which controls the IR cameras to take turns in using infrared light. This option is not available when the IR cameras are not controllable by such a common controller.

Another option for complying with the requirement is have the IR cameras communicate amongst themselves messaging indicative of infrared light use schedules or the like and have the IR cameras determine from the messaging when to take turns in using the infrared light. For instance, in a vehicle, the IR cameras may be connected to a vehicle bus via which the messaging is communicated. As such, this option is not available when the IR cameras are not connected to the vehicle bus and/or are otherwise are unable to communicate the messaging therebetween.

### SUMMARY

A system includes a first infrared (IR) camera configured to output a first IR light, a second IR camera configured to output a second IR light, a first sensor configured to detect the first IR light being outputted by the first camera, and a controller configured to control the second camera to not output the second IR light while the first sensor detects the first IR light being outputted by the first camera.

The system may further include a second sensor configured to detect the second IR light being outputted by the second camera and a second controller configured to control the first camera to not output the first IR light while the second sensor detects the second IR light being outputted by the second camera.

The first sensor may be remotely located from both the first camera and the second camera and/or the second sensor may be remotely located from both the first camera and the second camera. Alternatively, the first sensor may be an imaging device of the second camera and/or the second sensor may be an imaging device of the first camera.

The system may further include a third camera configured to output a third IR light and a third controller configured to control the third camera to not output the third IR light while the first sensor detects either (i) the first IR light being outputted by the first camera or (ii) the second IR light being outputted by the second camera.

The first camera and the second camera may be oriented to output their IR light towards a different target or towards a common target.

The first IR light may be a first IR light pulse train and the second IR light may be a second IR light pulse train. The controller may be further configured to detect a pulse rate of the first IR light pulse train based on the first IR light outputted by the first camera detected by the first sensor camera and to control the second camera to cause the second IR light pulse train to have a different pulse rate than the pulse rate of the first IR light pulse train.

The first camera and the second camera may lack any direct intercommunication. The controllers may lack any direct intercommunication.

A system for monitoring a driver of a vehicle includes first and second infrared (IR) cameras, a first sensor, and a controller. The first camera is configured to illuminate a driver of the vehicle with a first IR light for use of the first camera in monitoring the driver. The second camera is configured to illuminate the driver with a second IR light for use of the second camera in monitoring the driver. The first sensor is configured to detect a presence of the first IR light. The controller is configured to control the second camera to not illuminate the driver with the second IR light while the first sensor detects the presence of the first IR light.

The system may further include a second sensor configured to detect a presence of the second IR light and a second controller configured to control the first camera to not illuminate the driver with the first IR light while the second sensor detects the presence of the second IR light.

The first sensor may be a first photodiode that is oriented towards the first camera, and the second sensor may be a second photodiode that is oriented towards the second camera.

The first camera and the second camera may lack any vehicle bus intercommunication therebetween. The controllers may lack any vehicle bus intercommunication.

A method includes detecting, with a first sensor, a first infrared (IR) light being outputted by a first IR camera, and controlling, with a controller, a second IR camera to not output a second IR light while the first sensor detects the first IR light being outputted by the first camera.

The method may further include detecting, with a second sensor, the second IR light being outputted by the second camera, and controlling, with a second controller, the first camera to not output the first IR light while the second sensor detects the second IR light being outputted by the second camera.

The method may further include controlling, with a third controller, a third IR camera to not output a third IR light while either (i) the first sensor detects the first IR light being outputted by the first camera or (ii) the second sensor detects the second IR light being outputted by the second camera.

### BRIEF DESCRIPTION OF THE DRAWINGS

FIG. 1 illustrates a functional block diagram of a vehicle that includes a driver monitoring system (DMS) having an infrared (IR) camera and a camera system also having an IR camera; and
FIG. 2 illustrates a flowchart depicting operation of the DMS and the camera system in monitoring a driver of the vehicle.

### DETAILED DESCRIPTION

Detailed embodiments of the present disclosure are disclosed herein; however, it is to be understood that the disclosed embodiments are merely exemplary of the present disclosure that may be embodied in various and alternative forms. The figures are not necessarily to scale; some features may be exaggerated or minimized to show details of components. Therefore, specific structural and functional details disclosed herein are not to be interpreted as limiting, but merely as a representative basis for teaching one skilled in the art to variously employ the present disclosure.

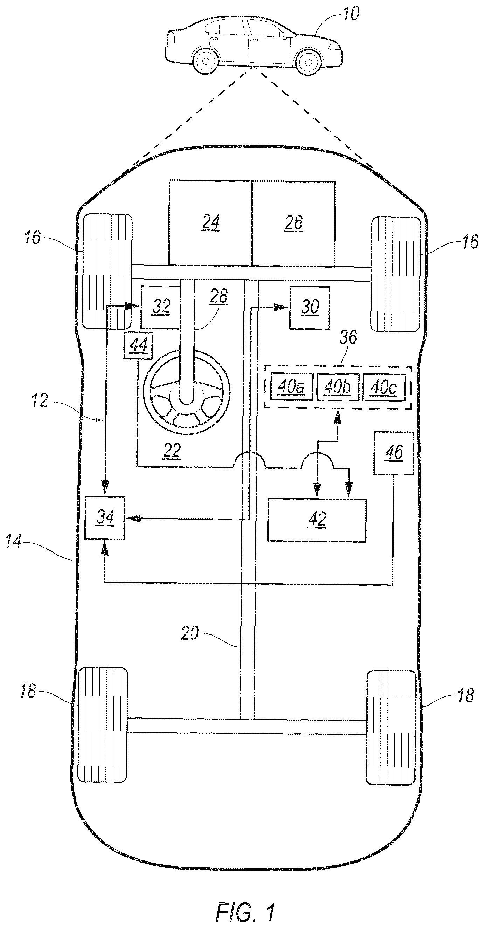

Referring now to FIG. 1, a functional block diagram of a vehicle 10 is shown. As depicted in FIG. 1, vehicle 10 comprises an automobile. However, vehicle 10 may comprise any number of other types of mobile platforms. Vehicle 10 generally includes a body 14, front wheels 16, rear wheels 18, and a chassis 20. Body 14 is arranged on chassis 20 and substantially encloses components of vehicle 10. Wheels 16 and 18 are rotationally coupled to chassis 12 near respective corners of body 14. Body 14 includes a vehicle cabin 22. A driver of vehicle 10, and any other occupants of the vehicle, are seated within vehicle cabin 22 during operation of the vehicle. Vehicle 10 further includes a propulsion system 24, a transmission system 26, and a steering system 28. Transmission system 26 transmits power from propulsion system 24 to wheels 16 and 18. Steering system 24 influences a position of wheels 16 and 18.

Vehicle 10 further includes a display system 30. Display system 30 is operable to display information for occupants seated within vehicle cabin 22 to view and hear.

Vehicle 10 further includes a driver monitoring system (DMS) 12. DMS 12 is operable to monitor physical and behavior cues of a driver seated within vehicle cabin 22 and to determine a status of the driver based on the monitored driver information. DMS 12 is configured to perform actions based on the status of the driver. Such actions include generating an alert on display 30 to alert the driver and/or other occupants of the status of the driver.

To monitor the driver, DMS 12 includes an infrared (IR) camera 32. Camera 32 is positioned within vehicle cabin 22 to point towards the driver. Camera 32 uses infrared light to monitor the driver. In greater detail, an IR emitter of camera 32 outputs infrared light to illuminate the driver. Camera 32 detects the infrared light reflected from the driver to thereby monitor the driver. In this way, camera 32 may be used to track and monitor eye movements, head position, facial expressions, and the like of the driver for DMS 12 to determine a status of the driver therefrom.

DMS 12 further includes a controller 34. Controller 34 is operable to control camera 32 in outputting infrared light. That is, controller 34 is operable to control camera 32 as to when to output infrared light and when not to output infrared light. For instance, controller 34 is operable to set a schedule at which camera 32 outputs infrared light. The schedule may be to output infrared light continuously for some determined duration, to output a pulse train of infrared light with the pulse train having some determined pulse rate and pulse duration, etc.

Controller 34 is further operable to analyze the reflected infrared light detected by camera 32 to detect a status of the driver. Controller 34 is further operable to cause performance of a perform action of DMS 12 responsive to the detected status of the driver. For instance, controller 34 is operable to cause display 30 to generate an alert to alert the driver and/or other occupants of the status of the driver as determined by the DMS.

Vehicle 10 further includes an infrared camera system 36. Camera system 36 includes one or more infrared cameras 40a, 40b, 40n. Cameras 40a, 40b, and 40n are positioned within vehicle cabin 22 to point towards the same or different targets. A target may be an occupant of vehicle cabin 22 other than the driver. A target may be some specific portion of vehicle cabin 22. A target may be the driver. Cameras 40a, 40b, 40n use infrared light to monitor their target(s) in similar fashion as camera 32 of DMS 12 uses infrared light to monitor the driver.

Camera system 36 includes at least one infrared camera that is positioned within vehicle cabin 22 to point towards the driver and to use infrared light to monitor the driver. For simplicity, camera system 36 will be considered as having only one camera for monitoring the driver (i.e., only one of cameras 40a, 40b, 40n is configured to monitor the driver) and this camera will be designated as camera 40.

Vehicle 10 further includes a controller 42 that is associated with camera system 36. Controller 42 is operable to control camera 40 in outputting infrared light. That is, controller 42 is operable to control camera 40 as to when to output infrared light and when not to output infrared light. For instance, controller 42 is operable to set a schedule at which camera 40 outputs infrared light. The schedule may be to output infrared light continuously for some determined duration, to output a pulse train of infrared light with the pulse train having some determined pulse rate and pulse duration, etc. Controller 42 may be further operable to analyze the reflected infrared light detected by camera 40 to detect a status of the driver and to cause performance of a perform action based on the status of the driver as detected with camera 40.

Controllers 34 and 42 each include a data storage device which stores data for use by the controllers in controlling the respective cameras. The data storage device may be any type of direct access storage and/or other memory device. Controllers 34 and 42 each further include a processor, a communication bus, and a computer readable storage device or media. The processors perform computation and control functions of their controllers. The processors can be any custom made or commercially available processor, a central processing unit (CPU), a graphics processing unit (GPU), or an auxiliary processor among several processors associated with their controllers. The computer readable storage device or media may include volatile and nonvolatile storage devices capable of storing data, some of which represent executable instructions, used by their controllers in controlling the cameras. The buses serve to transmit sensor signals and control signals between the respective set of controllers and cameras.

As indicated in FIG. 1, DMS 12 and camera system 36 are individual systems that are separate from one another. Each system includes an IR camera and a controller. Namely, DMS 12 includes camera 32 and controller 34, and camera system 36 includes camera 40 and controller 42. As being part of separate systems, cameras 32 and 40 lack any means for direct intercommunication therebetween and controllers 34 and 42 lack any lack any means for direct intercommunication therebetween.

Herein, camera 32 and controller 34 of DMS 12 may be referred to as "first camera" 32 and "first controller" 34; and camera 40 and controller 42 of camera system 36 may be referred to as "second camera" 40 and "second controller" 42.

A requirement of using first camera 32 and second camera 40 in monitoring the driver of vehicle 10 is that the cameras do not output IR light concurrently. That is, first camera 32 and second camera 40 are not to have overlapping or concurrent IR illumination and are not to output IR light at the same time.

In accordance with the present disclosure, this requirement is met with the provision of IR light sensors which monitor for IR light outputted by cameras 32 and 40 and which are in communication with controllers 34 and 42 for the controllers to apprised of when the cameras are outputting IR light so that the controllers can control the cameras to have only one of the cameras output IR light at any given time.

In detail, with reference to FIG. 1, second controller 42 has an associated sensor 44. Sensor 44 is configured to monitor for IR light outputted by first camera 32. That is, sensor 44 is configured to detect for a presence of IR light from first camera 32. In this way, sensor 44 detects when first camera 32 is outputting IR light and when the first camera is not outputting IR light. As sensor 44 monitors first camera 32, sensor 44 may be referred to herein as "first sensor" 44.

Likewise, first controller 34 has an associated sensor 46. Sensor 46 is configured to monitor for IR light outputted by second camera 40. That is, sensor 46 is configured to detect for a presence of IR light from second camera 40. In this way, sensor 46 detects when second camera 40 is outputting IR light and when the second camera is not outputting IR light. As sensor 46 monitors second camera 40, sensor 46 may be referred to herein as "second sensor" 46.

Sensors 44 and 46 may be photodetectors, photo-diode devices, etc. As such, in this case, first sensor 44 is remotely located from first camera 32, and second sensor 46 is remotely located from second camera 40. Alternatively, sensors 44 and 46 may be imaging devices of the respective other unmonitored cameras. That is, first sensor 44 may be an imaging device of second camera 40; and second sensor 46 may be an imaging device of first camera 32.

Second controller 42 is in communication with first sensor 44 to be apprised of when first camera 32 is outputting IR light. On a general level, from this information monitored by first sensor 44, second controller 42 can determine when first camera 32 is illuminating the driver with IR light, i.e., when the first camera is outputting IR light. On a more detailed level, from this monitored information, second controller 42 can determine specific attributes of IR light outputted by first camera 32 including a pulse rate and pulse duration in the case of the outputted IR light being an IR light pulse train.

Second controller 42 controls second camera 36 to not output IR light while first camera 32 is outputting IR light. Consequently, in monitoring the driver of vehicle 10, second camera 40 does not cause IR light to be outputted concurrently by the first and second cameras.

Likewise, first controller 34 is in communication with second sensor 46 to be apprised of when second camera 40 is outputting IR light. First controller 34 can therefore determine when second camera 40 is illuminating the driver with IR light, i.e., when the second camera is outputting IR light. First controller 34 controls first camera 32 to not output IR light while second camera 40 is outputting IR light. Consequently, in monitoring the driver of vehicle 10, first camera 32 does not cause IR light to be outputted concurrently by the first and second cameras.

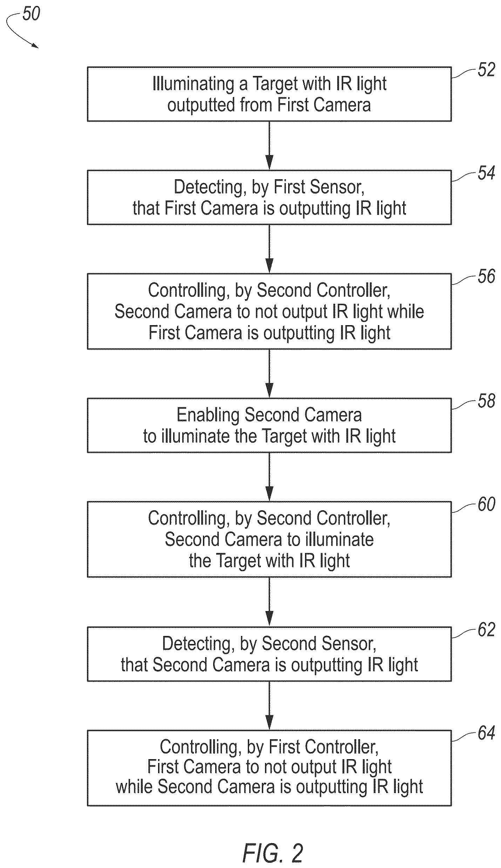

Referring now to FIG. 2, with continual reference to FIG. 1, a flowchart 50 depicting operation of DMS 12 and camera system 36 in monitoring a driver of vehicle 10 is shown. The operation includes illuminating a target (e.g., a driver of vehicle 10) with IR light outputted from first camera 32, as indicated in block 52. The operation continues with detecting, by first sensor 44, that first camera 32 is outputting IR light, as indicated in block 54. The operation then continues with controlling, by second controller 42, second camera 40 to not output IR light while first sensor 44 detects that first camera 32 is outputting IR light, as indicated in block 56.

The operation further includes enabling second camera 40 to illuminate the target with IR light, as indicated in block 58. The operation continues with controlling, by second controller 42, second camera 40 to illuminate the target with IR light, as indicated in block 60. The operation then continues with detecting, by second sensor 46, that second camera 40 is outputting IR light, as indicated in block 62; and controlling, by first controller 34, first camera 32 to not output IR light while second sensor 46 detects that second camera 40 is outputting IR light, as indicated in block 64.

As described, a situation may involve two cameras existing in a vehicle with both cameras being actively IR illuminable. The two cameras are not connected over a bus network or the like in which they could exchange relevant messages that could be used to establish a temporal relationship. A first one of the cameras may be designated as a lead camera in that it serves a functional safety relevant purpose. This first camera does not transmit any message into a communication bus or the like that would indicate actual exposure or IR flash event. The second one of the cameras is intended to operate at some point while the first one of the cameras is operating. It is not permitted that IR illumination from the second one of the cameras to overlap with IR illumination of the first one of the cameras. That is, the second camera is to operate without causing any cross-interference with the first camera. More generally, it is not permitted that IR illumination from either one of the cameras overlaps with IR illumination from the other one of the cameras.

As described, the present disclosure describes ways in which the cameras are de-synchronized. Approaches to de-synchronize the cameras include detection. For example, introduce IR sensing element, e.g., IR photodiode, to detect IR pulses (IR light) stemming from the first camera and/or use an imager from the second camera to detect the IR pulses stemming from the first camera. The approaches to de-synchronize the cameras may further include determining a pulse rate of the IR pulses stemming from the first camera, such as via interrupt-based or algorithm-based processing.

While exemplary embodiments are described above, it is not intended that these embodiments describe all possible forms of the present disclosure. Rather, the words used in the specification are words of description rather than limitation, and it is understood that various changes may be made without departing from the spirit and scope of the present disclosure. Additionally, the features of various implementing embodiments may be combined to form further embodiments of the present disclosure.

### FURTHER EXAMPLES

Example 1. A system comprising: a first camera configured to output a first infrared (IR) light; a second camera configured to output a second IR light; a first sensor configured to detect the first IR light being outputted by the first camera; and a controller configured to control the second camera to not output the second IR light while the first sensor detects the first IR light being outputted by the first camera.

Example 2. The system of example 1 further comprising: a second sensor configured to detect the second IR light being outputted by the second camera; and a second controller configured to control the first camera to not output the first IR light while the second sensor detects the second IR light being outputted by the second camera.

Example 3. The system of example 1 or 2 wherein: the first sensor is remotely located from both the first camera and the second camera.

Example 4. The system of any of examples 1 to 3, wherein the first sensor is an imaging device of the second camera.

Example 5. The system of any of examples 1 to 4 wherein: the first sensor is remotely located from both the first camera and the second camera and/or the second sensor is remotely located from both the first camera and the second camera.

Example 6. The system of any of examples 1 to 5 wherein: the first sensor is an imaging device of the second camera and/or the second sensor is an imaging device of the first camera.

Example 7. The system of any of examples 1 to 6 further comprising: a third camera configured to output a third IR light; and a third controller configured to control the third camera to not output the third IR light while the first sensor detects either (i) the first IR light being outputted by the first camera or (ii) the second IR light being outputted by the second camera.

Example 8. The system of any of examples 1 to 7, wherein: the first camera is oriented to output the first IR light towards a target; and the second camera is oriented to output the second IR light towards a different target.

Example 9. The system of any of examples 1 to 8 wherein: the first camera is oriented to output the first IR light towards a target; and the second camera is oriented to output the second IR light towards the same target.

Example 10. The system of any of examples 1 to 9 wherein: the first IR light is a first IR light pulse train; the second IR light is a second IR light pulse train; the controller is further configured to detect a pulse rate of the first IR light pulse train based on the first IR light outputted by the first camera detected by the first sensor; and the controller is further configured to control the second camera to cause the second IR light pulse train to have a different pulse rate than the pulse rate of the first IR light pulse train.

Example 11. The system of any of examples 1 to 10 wherein: the first camera and the second camera lack any direct intercommunication.

Example 12. The system of any of examples 1 to 11 wherein: the controllers lack any direct intercommunication.

Example 13. A system for monitoring a driver of a vehicle, the system comprising: a first camera configured to illuminate a driver of the vehicle with a first infrared (IR) light for use of the first camera in monitoring the driver; a second camera configured to illuminate the driver with a second IR light for use of the second camera in monitoring the driver; a first sensor configured to detect a presence of the first IR light; and a controller configured to control the second camera to not illuminate the driver with the second IR light while the first sensor detects the presence of the first IR light.

Example 14. The system of example 13 further comprising: a second sensor configured to detect a presence of the second IR light; and a second controller further configured to control the first camera to not illuminate the driver with the first IR light while the second sensor detects the presence of the second IR light.

Example 15. The system of example 14 wherein: the first sensor is a first photodiode oriented towards the first camera, and the second sensor is a second photodiode oriented towards the second camera.

Example 16. The system of any of examples 13 to 15 wherein: the first camera and the second camera lack any vehicle bus intercommunication therebetween.

Example 17. The system of any of examples 13 to 16 wherein: the controllers lack any vehicle bus intercommunication therebetween.

Example 18. A method comprising: detecting, with a first sensor, a first infrared (IR) light being outputted by a first IR camera; and controlling, with a controller, a second IR camera to not output a second IR light while the first sensor detects the first IR light being outputted by the first camera.

Example 19. The method of example 18 further comprising: detecting, with a second sensor, the second IR light being outputted by the second camera; and controlling, with a second controller, the first camera to not output the first IR light while the second sensor detects the second IR light being outputted by the second camera.

Example 20. The method of example 19 further comprising: controlling, with a third controller, a third IR camera to not output a third IR light while either (i) the first sensor detects the first IR light being outputted by the first camera or (ii) the second sensor detects the second IR light being outputted by the second camera.

## Claims

1. A system comprising:
a first camera configured to output a first infrared (IR) light;
a second camera configured to output a second IR light;
a first sensor configured to detect the first IR light being outputted by the first camera; and
a controller configured to control the second camera to not output the second IR light while the first sensor detects the first IR light being outputted by the first camera.

2. The system of claim 1 further comprising:
a second sensor configured to detect the second IR light being outputted by the second camera; and
a second controller configured to control the first camera to not output the first IR light while the second sensor detects the second IR light being outputted by the second camera.

3. The system of claim 1 wherein:
the first sensor is remotely located from both the first camera and the second camera.

4. The system of claim 1 wherein:
the first sensor is an imaging device of the second camera.

5. The system of claim 2 further comprising:
a third camera configured to output a third IR light; and
a third controller configured to control the third camera to not output the third IR light while the first sensor detects either (i) the first IR light being outputted by the first camera or (ii) the second IR light being outputted by the second camera.

6. The system of claim 1 wherein:
the first camera is oriented to output the first IR light towards a target; and
the second camera is oriented to output the second IR light towards a different target.

7. The system of claim 1 wherein:
the first camera is oriented to output the first IR light towards a target; and
the second camera is oriented to output the second IR light towards the same target.

8. The system of claim 1 wherein:
the first IR light is a first IR light pulse train;
the second IR light is a second IR light pulse train;
the controller is further configured to detect a pulse rate of the first IR light pulse train based on the first IR light outputted by the first camera detected by the first sensor; and
the controller is further configured to control the second camera to cause the second IR light pulse train to have a different pulse rate than the pulse rate of the first IR light pulse train.

9. The system of claim 1 wherein:
the first camera and the second camera lack any direct intercommunication.

10. The system of claim 2 wherein:
the controllers lack any direct intercommunication.

11. A system for monitoring a driver of a vehicle, the system comprising:
a first camera configured to illuminate a driver of the vehicle with a first infrared (IR) light for use of the first camera in monitoring the driver;
a second camera configured to illuminate the driver with a second IR light for use of the second camera in monitoring the driver;
a first sensor configured to detect a presence of the first IR light; and
a controller configured to control the second camera to not illuminate the driver with the second IR light while the first sensor detects the presence of the first IR light.

12. The system of claim 11 further comprising:
a second sensor configured to detect a presence of the second IR light; and
a second controller further configured to control the first camera to not illuminate the driver with the first IR light while the second sensor detects the presence of the second IR light.

13. A method comprising:
detecting, with a first sensor, a first infrared (IR) light being outputted by a first IR camera; and
controlling, with a controller, a second IR camera to not output a second IR light while the first sensor detects the first IR light being outputted by the first camera.

14. The method of claim 13 further comprising:
detecting, with a second sensor, the second IR light being outputted by the second camera; and
controlling, with a second controller, the first camera to not output the first IR light while the second sensor detects the second IR light being outputted by the second camera.

15. The method of claim 14 further comprising:
controlling, with a third controller, a third IR camera to not output a third IR light while either (i) the first sensor detects the first IR light being outputted by the first camera or (ii) the second sensor detects the second IR light being outputted by the second camera.
